# EUROPEAN PATENT APPLICATION

(11) **EP 4 793 246 A1**
(43) Date of publication of application: **19.08.2026**
(21) Application number: 24877297.2
(22) Date of filing: 11.10.2024
(51) Int. Cl.: C03B 37/029

(54) **METHOD FOR MANUFACTURING OPTICAL FIBER**

(30) Priority: 11.10.2023 JP 2023175739
(71) Applicant: Sumitomo Electric Industries, Ltd., Osaka-shi, Osaka 541-0041 (JP)
(72) Inventor: NOMURA, Takahiro, Osaka-shi, Osaka 541-0041 (JP); OKAZAKI, Iwao, Osaka-shi, Osaka 541-0041 (JP)
(74) Representative: TBK
(86) International application number: PCT/JP2024/036506
(87) International publication number: WO 2025/079703

(57) **Abstract**

There is provided a method for manufacturing an optical fiber by drawing a glass preform while feeding the glass preform into a heating furnace. The glass preform includes a core rod and a cladding tube into which the core rod is inserted. The method includes joining a quartz tube to an upper end of the cladding tube to allow a gap between the core rod and the cladding tube to communicate with an internal space of the quartz tube, and creating a vacuum state in the gap and the internal space of the quartz tube in a state where an upper portion of the quartz tube is gripped by a gripping part made of metal. A length of the quartz tube is 250 mm to 1250, and a heat shield plate is provided below the gripping part at a position 10 mm or more away from the gripping part.

## Description

### TECHNICAL FIELD

The present disclosure relates to a method for manufacturing an optical fiber.

The present application is based on Japanese Patent Application No. 2023-175739 filed on October 11, 2023, the entire contents of which are incorporated herein by reference.

### BACKGROUND ART

Patent Literature 1 discloses a method for manufacturing an optical fiber in a state where a quartz tube is joined to a glass preform. The glass preform is fused and thinned in a heating furnace and drawn to form an optical fiber.

### CITATION LIST

### PATENT LITERATURE

Patent Literature 1: JP2010-173895A

### SUMMARY OF INVENTION

### TECHNICAL PROBLEM

In Patent Literature 1, a dummy quartz tube and a holding quartz tube are attached to an upper portion of an optical fiber preform, and a vacuum cap is attached to an upper portion of the quartz tube.

When the optical fiber preform is drawn, the radiation heat from the drawing furnace might reach the upper portion of the preform. Therefore, a gripping member that grips the quartz tube may be excessively heated and may be damaged or deteriorate.

An object of the present disclosure is to provide a method for manufacturing an optical fiber where durability of a gripping part is improved.

### SOLUTION TO PROBLEM

A method for manufacturing an optical fiber according to one aspect of the present disclosure is a method for manufacturing an optical fiber by drawing a glass preform while feeding the glass preform into a heating furnace. The glass preform includes a core rod and a cladding tube into which the core rod is inserted. The method includes: joining a quartz tube to an upper end of the cladding tube to allow a gap between the core rod and the cladding tube to communicate with an internal space of the quartz tube; and creating a vacuum state in the hollow portion and the internal space in a state where an upper portion of the quartz tube is gripped by a gripping part made of metal, wherein a length of the quartz tube is 250 mm or more and 1250 mm or less, and a heat shield plate is provided below the gripping part at a position 10 mm or more away from the gripping part.

### ADVANTAGEOUS EFFECTS OF INVENTION

According to the present disclosure, a method for manufacturing an optical fiber can be provided where durability of a gripping part is improved.

### BRIEF DESCRIPTION OF DRAWINGS

[FIG. 1] FIG. 1 is a schematic view of a manufacturing apparatus for an optical fiber according to the present embodiment.
[FIG. 2] FIG. 2 is a plan view of a gripping part and a heat shield plate.
[FIG. 3] FIG. 3 is a diagram showing a relationship between a length of a quartz tube and a temperature of the gripping part in Examples 1 to 4, 8 and 9 in Table 1.

### DESCRIPTION OF EMBODIMENTS

### (Description of Embodiment of Present Disclosure)

First, aspects of the present disclosure will be described.
(1) A method for manufacturing an optical fiber according to one aspect of the present disclosure is a method for manufacturing an optical fiber by drawing a glass preform while feeding the glass preform into a heating furnace. The glass preform includes a core rod and a cladding tube into which the core rod is inserted. The method includes: joining a quartz tube to an upper end of the cladding tube to allow a gap between the core rod and the cladding tube to communicate with an internal space of the quartz tube; and creating a vacuum state in the hollow portion and the internal space in a state where an upper portion of the quartz tube is gripped by a gripping part made of metal, wherein a length of the quartz tube is 250 mm or more and 1250 mm or less, and a heat shield plate is provided below the gripping part at a position 10 mm or more away from the gripping part.

According to the above-described method for manufacturing an optical fiber, the length of the quartz tube is 250 mm or more and 1250 mm or less, and the optical fiber is manufactured in a state where the heat shield plate is provided between the middle point in the length of the quartz tube and the gripping part. At this time, the optical fiber can be manufactured while the gripping part made of metal is maintained so as not to have an excessively high temperature. Accordingly, durability of the gripping part can be improved.

(2) In the method for manufacturing an optical fiber according to (1), the heat shield plate may be displaced such that a distance between the heat shield plate and the gripping part does not change according to displacement of the gripping part.

According to the above-described configuration, since the distance between the heat shield plate and the gripping part does not change even when the gripping part made of metal is displaced, a heat shielding effect on the gripping part can be attained even when the gripping part approaches the heating furnace as the manufacturing of the optical fiber progresses and the glass preform descends.

(3) In the method for manufacturing an optical fiber according to (1) or (2), the glass preform may be fed toward the heating furnace by a feeder, and the heat shield plate may be attached to at least one of a movable portion of the feeder and the gripping part.

According to the above-described configuration, the glass preform is fed toward the heating furnace by the feeder, and the glass preform is fed toward the heating furnace at the same speed as the heat shield plate and the gripping part. Therefore, even when the gripping part approaches the heating furnace, the heat shield plate also approaches the heating furnace by the same amount. Therefore, even when the manufacturing of the optical fiber progresses, substantially the same heat shield effect can be expected.

(4) In the method for manufacturing an optical fiber according to any one of (1) to (3), an outer edge of the heat shield plate may be located outside the gripping part in a plan view.

According to the above-described configuration, since the gripping part is covered with the heat shield plate when viewed from the heating furnace, the gripping part is less likely to be directly exposed to the heat from the heating furnace.

(5) In the method for manufacturing an optical fiber according to any one of (1) to (4), the heat shield plate may be a metal plate.

According to the above-described configuration, since reflectance of the heat shield plate is sufficiently high, the heat shield plate itself is less likely to have heat and is less likely to be a heat source that excessively heats the gripping part.

(6) In the method for manufacturing an optical fiber according to any one of (1) to (4), at least a part of the heat shield plate may be made of carbon.

According to the above-described configuration, since at least a part of the heat shield plate is made of carbon, durability of the heat shield plate can be improved.

### (Details of Embodiment of Present Disclosure)

A specific example of a method for manufacturing an optical fiber according to an embodiment of the present disclosure will be described below with reference to the drawings. The present disclosure is not limited to these examples and should include any modifications that fall within a scope and meaning of claims and equivalent thereof.

In the description of the present embodiment, for convenience of description, an "upper-lower direction", a "left-right direction" and a "front-rear direction" will be appropriately referred to. Here, the "upper-lower direction" is a direction including the "upper direction" and the "lower direction". The "left-right direction" is a direction including the "left direction" and the "right direction". A reference sign U shown in the drawings to be described below indicates the upper direction. A reference sign D indicates the lower direction. A reference sign L indicates the left direction. A reference sign R indicates the right direction.

### (Manufacturing Apparatus)

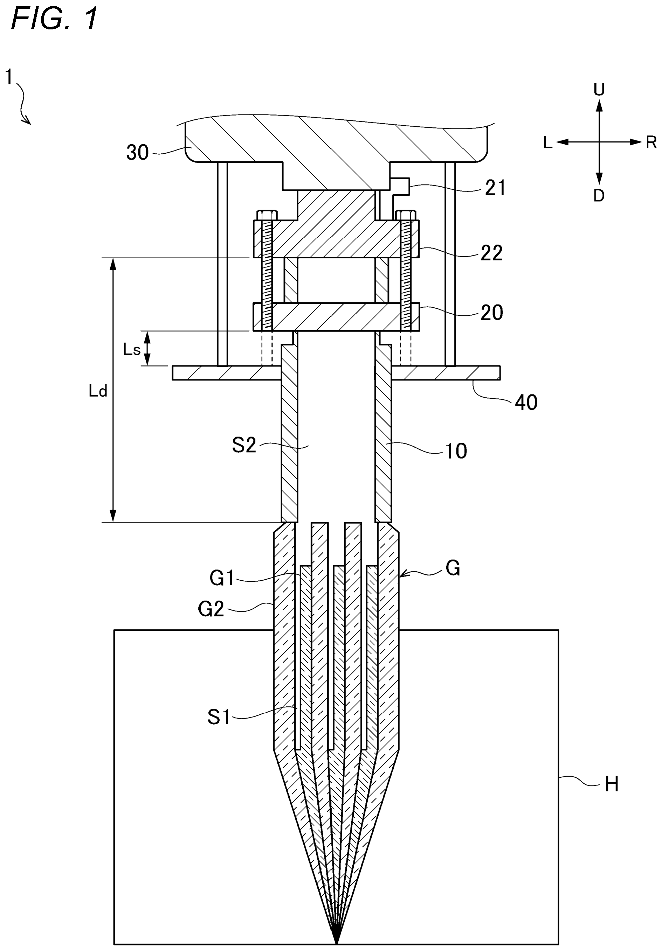

FIG. 1 is a schematic view of a manufacturing apparatus 1 for an optical fiber according to the present embodiment. The manufacturing apparatus 1 shown in FIG. 1 manufactures an optical fiber by drawing a glass preform G while feeding the glass preform to a heating furnace H. The heating furnace H is configured to fuse the glass preform by a heater or the like.

The glass preform G includes a core rod G1. The core rod G1 is made of quartz glass. The core rod G1 forms a core portion in the optical fiber.

The glass preform G includes a cladding tube G2. The cladding tube G2 is made of quartz glass. The core rod G1 is inserted into the cladding tube G2. A gap S1 is formed between the cladding tube G2 and the core rod G1. The cladding tube G2 forms a cladding portion that is provided around the core portion in the optical fiber. A refractive index adjusting agent is added to at least one of the core rod G1 and the cladding tube G2 such that the core rod G1 has a higher optical refractive index than the cladding tube G2.

A quartz tube 10 is joined to an upper end of the cladding tube G2. An internal space S2 of the quartz tube 10 communicates with the gap S1 between the cladding tube G2 and the core rod G1. The quartz tube 10 is made of, for example, quartz glass. A length Ld of the quartz tube 10 is 250 mm or more and 1250 mm or less.

A gripping part 20 is configured to grip an upper portion of the quartz tube 10. The gripping part 20 is made of metal. The gripping part 20 is divided into upper and lower parts and grips the upper portion of the quartz tube 10 by clamping the upper portion with a fastening component such as a bolt. In the gripping part 20, a pipe (not shown) for evacuating the gap S1 between the core rod G1 and the cladding tube G2 and S2 of the quartz tube 10 is connected to an exhaust pipe 21.

The gripping part 20 is provided with a lid portion 22. The lid portion 22 is fixed to the feeder. The lid portion 22 and the gripping part 20 are fastened by a bolt. A recess is formed on the side surface of the glass preform G or the quartz tube 10, and the glass preform G and the quartz tube 10 are suspended by hanging the gripping part 20 in the recess.

The glass preform G, the quartz tube 10 and the gripping part 20 are displaced by the feeder. As the manufacturing of the optical fiber progresses, the feeder gradually lowers the glass preform G, the quartz tube 10 and the gripping part 20, thereby being gradually fed into the heating furnace. The feeder includes a movable portion 30 that is displaced together with the glass preform G.

The manufacturing apparatus 1 includes a heat shield plate 40. The heat shield plate 40 is a disk-shaped plate formed with a hole for passing the quartz tube 10 at the center. The diameter of the heat shield plate 40 is larger than the diameter of the gripping part 20 in the plan view of the gripping part 20 from above or below. The heat shield plate 40 is provided such that the lower surface thereof faces the heating furnace H. The heat shield plate 40 is suspended from a support member.

The heat shield plate 40 is provided below the gripping part 20 at a position 10 mm or more away from the gripping part 20. In other words, a distance Ls between the heat shield plate 40 and the gripping part 20 is 10 mm or more. In the present embodiment, the heat shield plate 40 is attached to the movable portion 30. The heat shield plate 40 is in contact with the quartz tube 10. A slight gap may be formed between the heat shield plate 40 and the quartz tube 10.

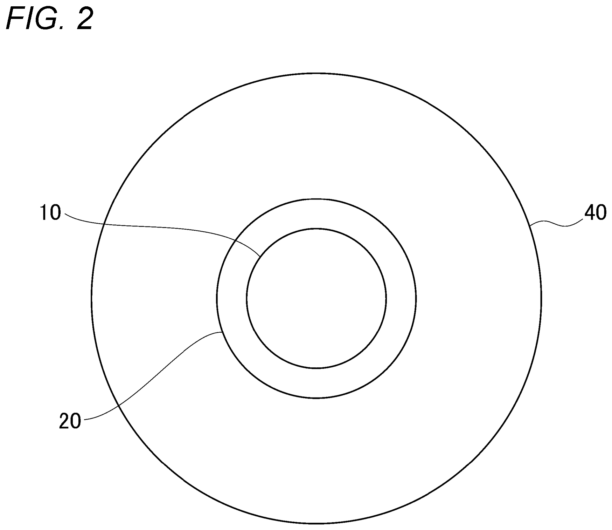

FIG. 2 is a plan view of the gripping part 20 and the heat shield plate 40. FIG. 2 is also a cross-sectional view taken along a horizontal cross section such that a cross section of the quartz tube 10 can be seen. As shown in FIG. 2, it is advantageous that the heat shield plate 40 is shaped such that the outer edge thereof is located outside the gripping part 20 in the plan view. In this case, when viewed transparently from the heating furnace H, the gripping part 20 is covered with the heat shield plate 40.

The heat shield plate 40 is advantageously made of a material having high heat resistance. Specifically, it is advantageous that the heat shield plate 40 has the heat resistance of 150°C or higher, preferably the heat resistance of 300°C or higher. The heat shield plate 40 may be a metal plate such as stainless steel (SUS) or iron. The metal plate is preferably mirror-polished. Stainless steel (SUS) and iron have high mechanical strength and excellent workability. Therefore, the heat shield plate 40 can be processed to be water-cooled or processed to have a heat sink mechanism so as to improve heat dissipation performance.

Next, a method for manufacturing an optical fiber using the manufacturing apparatus 1 will be described.

The glass preform G is fed to the heating furnace H by the feeder in a state where the quartz tube 10 is attached to the glass preform G and the gripping part 20 is attached to the upper portion of the quartz tube 10. Therefore, the glass preform G, the quartz tube 10 and the gripping part 20 are displaced toward the heating furnace H at the same speed.

The heat shield plate 40 is attached to the movable portion 30, and the movable portion 30 is fixed to the feeder. When the feeder moves downward, the heat shield plate 40 is displaced toward the heating furnace H at the same speed as the glass preform G, the quartz tube 10 and the gripping part 20. Accordingly, the heat shield plate 40 is displaced together with the glass preform G such that the distance Ls between the heat shield plate 40 and the gripping part 20 does not change according to the displacement of the gripping part 20.

The heat shield plate 40 is less likely to directly radiate the heat of the heating furnace H to the gripping part 20. Accordingly, a temperature of the gripping part 20 is less likely to become excessively high during the manufacturing of the optical fiber.

The gripping part 20 is made of metal. When the gripping part 20 has an excessively high temperature, the gripping part 20 is likely to deteriorate due to heat damage. According to the above-described method for manufacturing an optical fiber, the length of the quartz tube 10 is 250 mm or more and 1250 mm or less, and the optical fiber is manufactured in a state where the heat shield plate 40 is provided at a position that is 10 mm or more away from the gripping part 20. Since the gripping part 20 is not directly exposed to the heat from the heating furnace H, the optical fiber can be manufactured while the gripping part 20 made of metal is maintained so as not to have an excessively high temperature. Accordingly, the durability of the gripping part 20 can be improved.

According to the above-described method for manufacturing an optical fiber, since the heat shield plate 40 is attached to the movable portion 30 of the feeder, the heat shield plate 40 is displaced such that the distance Ls between the heat shield plate 40 and the gripping part 20 does not change according to the displacement of the gripping part 20. Therefore, even when the gripping part 20 approaches the heating furnace H, the heat shield plate 40 also approaches the heating furnace H by the same amount. Therefore, even when the manufacturing of the optical fiber progresses, substantially the same heat shield effect can be expected.

When the heat shield plate 40 is a metal plate, the workability is excellent.

At least a part of the heat shield plate 40 may be made of carbon. Since carbon has high heat resistance and is less likely to thermally expand, the heat shield plate 40 is less likely to be distorted and the durability of the heat shield plate 40 is improved even when a temperature change is repeated between when the optical fiber is manufactured and when the manufacture is stopped.

Next, verification results on the length of the quartz tube will be described. Table 1 shows the temperature of the gripping part according to the length of the quartz tube when the lower end of the quartz tube is at a predetermined distance from the upper end of the heating furnace (the temperature when the lower end of the dummy tube is at a predetermined distance from the upper end of the heating furnace). Examples 1 to 4 and 8 show the results when the heat shield plate is provided. Examples 5 to 7 show the results when the heat shield plate is not provided. In all the examples, the distance Ls from the gripping part to the heat shield plate is 10 mm, and the heat shield plate is made of stainless steel.

### [Table 1]

**TABLE 1**

| | Ld [mm] | HEAT SHIELD PLATE | TEMPERATURE [°C] OF GRIPPING PART |
|---|---|---|---|
| EXAMPLE 1 | 1250 | PROVIDED | 60 |
| EXAMPLE 2 | 1000 | PROVIDED | 68 |
| EXAMPLE 3 | 750 | PROVIDED | 75 |
| EXAMPLE 4 | 250 | PROVIDED | 130 |
| EXAMPLE 5 | 1000 | NOT PROVIDED | 161 |
| EXAMPLE 6 | 1250 | NOT PROVIDED | 154 |
| EXAMPLE 7 | 1500 | NOT PROVIDED | 139 |
| EXAMPLE 8 | 100 | PROVIDED | 165 |
| EXAMPLE 9 | 500 | PROVIDED | 93 |

As shown in Table 1, the larger the length Ld of the quartz tube, the lower the temperature of the gripping part. As shown in Examples 1 and 6, or 2 and 5, even when the length of the quartz tube is the same, the temperature of the gripping part is reduced when the heat shield plate is provided.

Accordingly, the temperature of the gripping part is reduced when the heat shield plate is provided, and the temperature of the gripping part is reduced when the length Ld of the quartz tube is larger. Meanwhile, in the same optical fiber manufacturing apparatus, when the length of the quartz tube is increased, the length of the glass preform is reduced. Since the manufacturing cost of the optical fiber is reduced as the drawing amount at one time is increased, the glass preform is preferably long and the length Ld of the quartz tube is preferably small. It is advantageous that the length Ld of the quartz tube be 250 mm or more and 1250 mm or less in order to achieve both the difficulty in increasing the temperature of the gripping part and the reduction in the manufacturing cost of the optical fiber.

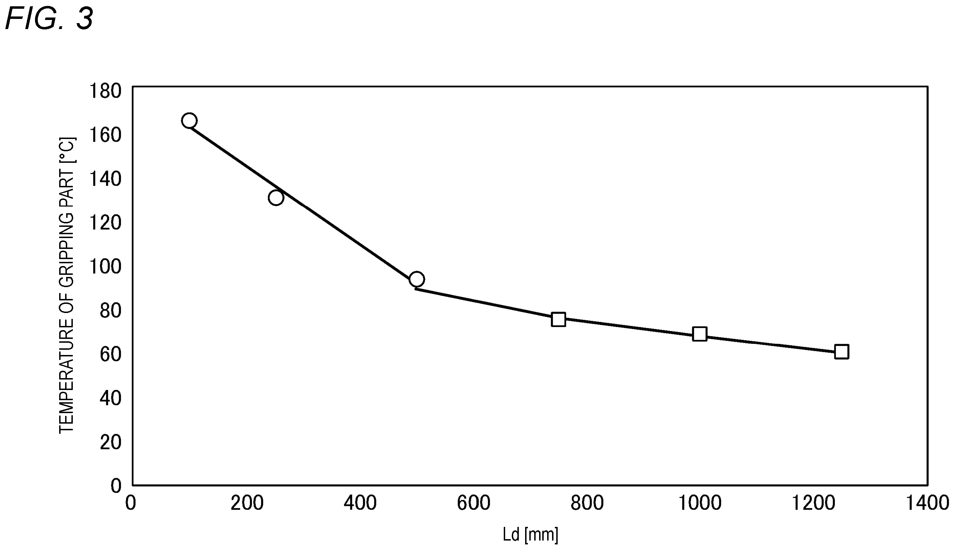

FIG. 3 is a diagram showing the relationship between the length Ld of the quartz tube and the temperature of the gripping part in Examples 1 to 4, 8 and 9 in Table 1. Examples 1 to 4, 8 and 9 are all examples where a heat shield plate is provided. As shown in FIG. 3, it can be seen that the temperature of the gripping part decreases as the length Ld of the quartz tube increases.

Here, the slope of the temperature of the gripping part when the length Ld of the quartz tube is 100 mm or more and 500 mm or less is larger than the slope of the temperature of the gripping part when the length Ld of the quartz tube is 500 mm or more and 1250 mm or less. Therefore, when the length Ld of the quartz tube is 100 mm or more and 500 mm or less, the temperature of the gripping part is less likely to increase by providing the heat shield plate, which is effective.

Although the present disclosure has been described in detail with reference to the specific embodiment, it is apparent to those skilled in the art that various changes and modifications can be made without departing from the inventive concept of the present disclosure. The number, positions, shapes and the like of the constituent members described above are not limited to those in the above embodiment and can be changed to the numbers, positions, shapes and the like suitable for carrying out the present disclosure.

As shown by a broken line in FIG. 1, the heat shield plate 40 may be attached to the gripping part 20 instead of being attached to the movable portion 30. In this case, similarly to the present embodiment, the heat shield plate 40 can also be displaced together with the glass preform G such that the distance Ls between the heat shield plate 40 and the gripping part 20 does not change.

In the present embodiment, the method for manufacturing a multi-core optical fiber is exemplified. Alternatively, a method for manufacturing a single-core optical fiber including one core portion of the optical fiber may also be used.

### REFERENCE SIGNS LIST

1: manufacturing apparatus
10: quartz tube
20: gripping part
21: exhaust pipe
22: lid portion
30: movable portion
40: heat shield plate
G: glass preform
G1: core rod
G2: cladding tube
H: heating furnace
S1: gap
S2: internal space

## Claims

1. A method for manufacturing an optical fiber by drawing a glass preform while feeding the glass preform into a heating furnace, the glass preform including a core rod and a cladding tube into which the core rod is inserted, the method comprising:
joining a quartz tube to an upper end of the cladding tube to allow a gap between the core rod and the cladding tube to communicate with an internal space of the quartz tube; and
creating a vacuum state in the gap and the internal space of the quartz tube in a state where an upper portion of the quartz tube is gripped by a gripping part made of metal,
wherein a length of the quartz tube is 250 mm or more and 1250 mm or less, and
wherein a heat shield plate is provided below the gripping part at a position 10 mm or more away from the gripping part.

2. The method for manufacturing an optical fiber according to claim 1,
wherein the heat shield plate is displaced such that a distance between the heat shield plate and the gripping part does not change according to displacement of the gripping part.

3. The method for manufacturing an optical fiber according to claim 1 or 2,
wherein the glass preform is fed toward the heating furnace by a feeder, and
wherein the heat shield plate is attached to at least one of a movable portion of the feeder and the gripping part.

4. The method for manufacturing an optical fiber according to any one of claims 1 to 3,
wherein an outer edge of the heat shield plate is located outside the gripping part in a plan view.

5. The method for manufacturing an optical fiber according to any one of claims 1 to 4,
wherein the heat shield plate is a metal plate.

6. The method for manufacturing an optical fiber according to any one of claims 1 to 4,
wherein at least a part of the heat shield plate is made of carbon.
